(19) Europäisches Patentamt / European Patent Office / Office européen des brevets

(11) **EP 2 884 730 A1**

(12) **EUROPEAN PATENT APPLICATION**

(43) Date of publication:
17.06.2015 Bulletin 2015/25

(51) Int Cl.:
*H04N 1/40* (2006.01)

(21) Application number: 14193846.4

(22) Date of filing: 19.11.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 11.12.2013 US 201314103761

(71) Applicant: Ricoh Company, Ltd.
Tokyo 143-8555 (JP)

(72) Inventors:
• Chandu, Kartheek
Boulder, CO Colorado 80301 (US)
• Stanich, Mikel John
Boulder, CO Colorado 80301 (US)

(74) Representative: Schwabe - Sandmair - Marx
Patentanwälte
Stuntzstraße 16
81677 München (DE)

(54) **Binary periodic to multibit aperiodic halftone and resolution conversion**

(57) A method is disclosed. The method includes receiving a first image as a binary periodic Halftone Image (HTI) with a first resolution, scaling the image to render a second image as a continuous-tone HTI with a second resolution, and iteratively processing the scaled image to render a third image as a multibit aperiodic HTI.

*FIG. 3*

**Description**

TECHNICAL FIELD

The invention relates to the field of image reproduction, and in particular, to digital halftoning.

BACKGROUND ART

Digital halftoning is a technique for displaying a picture on a two-dimensional medium, in which small dots and a limited number of colors are used. The picture appears to consist of many colors when viewed from a proper distance. For example, a picture consisting of black and white dots can appear to display various gray levels. Digital printers, which were initially pure black and white machines with a very coarse resolution, have evolved to accommodate colors, finer resolutions, and more recently, more than one bit of information per pixel (referred to as "multibit" or "multi-tone").
Many documents and images have been saved in print formats for electrophotographic (EP or Laser) printers. These documents have been screened using binary periodic halftones at specific picture element (PEL) resolutions and halftone Line Per Inch (LPI) frequencies. If these documents are simply printed using an ink jet printer as binary periodic dots with a change in resolution, then the resulting printed results will appear much worse than when printed using electrophotographic technology. This is due to the change in resolution, which can introduce scaling or resampling artifacts, especially for the cases where the original and target printer resolutions are not integer multiples of each other. In addition, the screening initially applied to the documents for the EP printer is suboptimal for images printed on an ink jet printer. Ideally, one would like to employ the advantages of multibit ink control, available in the target ink jet printer, when converting from the binary format of the original image.
Halftones without clustering, as used in inkjet printers, produce what many observers consider an even better perceived appearance. Inkjet printers use stochastic or aperiodic halftones to capitalize on its technology advantages and avoid some of its limitations. Specifically this is the ability to print consistent isolated PELs, while avoiding issues related to drying.
The traditional approach to improve the conversion of saved documents is to change the resolution of the images and reapply a different halftone screen suitable for a different printer. This involves first descreening or inverse screening the original data to recover the continuous-tone information from the binary screened image, second scaling or resampling the continuous-tone image to the new resolution required by the target printer device and finally rescreening the continuous-tone data using the appropriate halftone for the target printer. There may also be also additional steps of segmenting the image data into text, line art, and image data.
Accordingly, an algorithm to efficiently convert binary periodic halftone images to multibit aperiodic halftone images with a change in resolution is desired.

**DISCLOSURE OF THE INVENTION**

In one embodiment, a method is disclosed. The method includes receiving a first image as a binary periodic Halftone Image (HTI) with a first resolution, scaling the image to render a second image as a continuous-tone HTI with a second resolution, and iteratively processing the scaled image to render a third image as a multibit aperiodic HTI.

**BRIEF DESCRIPTION OF THE DRAWINGS**

A better understanding of the present invention can be obtained from the following detailed description in conjunction with the following drawings, in which:

Figure 1 illustrates one embodiment of a printing network;
Figure 2 illustrates one embodiment of a print controller;
Figure 3 illustrates a process flow of converting an image according to an embodiment;
Figure 4 illustrates a process flow of area scaling according to an embodiment;
Figure 5A illustrates a portion of an image at a first resolution upscaled to a second higher resolution according to an embodiment;
Figure 5B illustrates a portion of an image at a first resolution upscaled to an intermediate higher resolution according to an embodiment;
Figure 5C illustrates a portion of an image at an upscaled intermediate resolution downscaled to a second lower resolution according to an embodiment;
Figure 6 illustrates deriving pixel values for a downscaled image according to an embodiment;
Figure 7 illustrates a process flow of iterating with DMS to converge on a final halftone image according to an embodiment;
Figure 8 illustrates a process flow of converted images from a first resolution to a second resolution according to an embodiment; and
Figure 9 illustrates one embodiment of a computer system.

## BEST MODE FOR CARRYING OUT THE INVENTION

A binary periodic to multibit aperiodic halftone and resolution conversion is described. In the following description, for the purposes of explanation, numerous specific details are set forth in order to provide a thorough understanding of the present invention. It will be apparent, however, to one skilled in the art that the present invention may be practiced without some of these specific details. In other instances, well-known structures and devices are shown in block diagram form to avoid obscuring the underlying principles of the present invention.

Reference in the specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment.

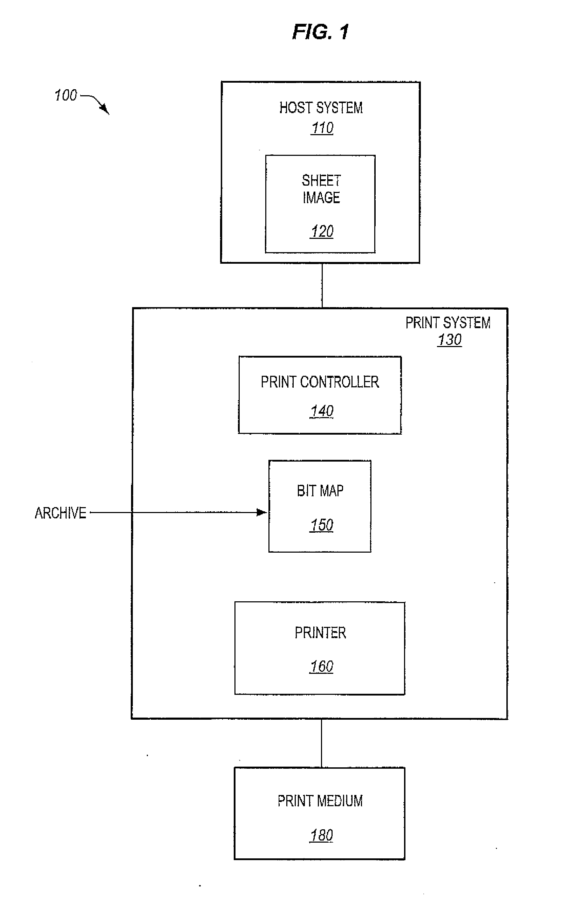

Figure 1 is a block diagram illustrating a printing network 100. Network 100 includes a host system 90 in communication with a printing system 130 to print a sheet image 120 onto a print medium 180 (e.g., paper) via a printer 160. The resulting print medium 180 may be printed in color and/or in any of a number of gray shades, including black and white.

The host system 90 may include any computing device, such as a personal computer, a server, or even a digital imaging device, such as a digital camera or a scanner. The sheet image 120 may be any file or data that describes how an image on a sheet of print medium should be printed. For example, the sheet image 120 may include PostScript data, Printer Command Language (PCL) data, Intelligent Printer Data Stream (IPDS) and/or any other printer language data. The print controller 140 processes the sheet image to generate a bitmap 150 for printing to the print medium 180 via the printer 160. The sheet image 120 may also be an archived version of the Bit Map 150, in which case the controller recognizes this and simply formats the image for printing without applying any halftoning. Resolution conversion might be applied to prepare the job for printing if the job was archived at a different resolution.

The printing system 130 may be a high-speed printer operable to print relatively high volumes (e.g., greater than 100 pages per minute). The print medium 180 may be continuous form paper, cut sheet paper, and/or any other tangible medium suitable for printing. In one embodiment, the printing system 130 includes the printer 160 that presents the Bit Map 150 onto the print medium 180 (e.g., via toner, ink, etc.) based on the sheet image 120. A branch from the Bit Map stage 150 illustrates archiving. The archiving may be to a separate system or to the host system 110, for example.

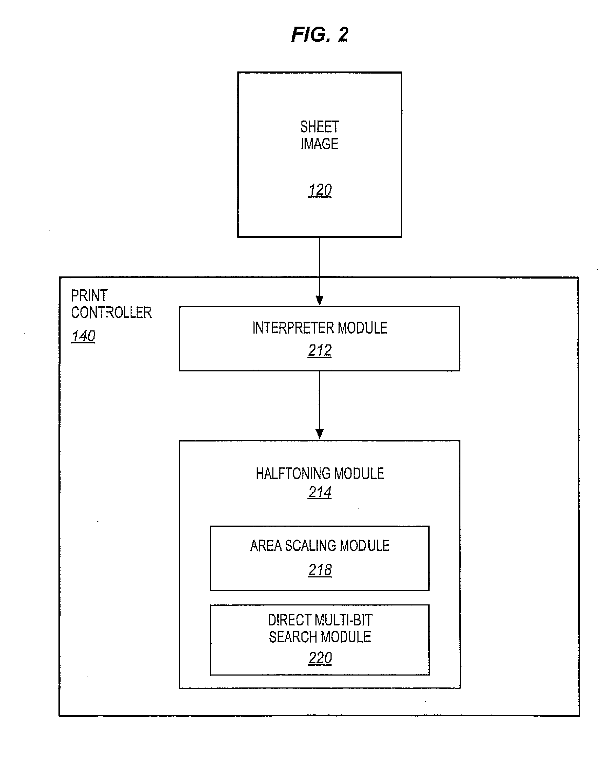

The print controller 140 may be any system, device, software, circuitry and/or other suitable component operable to transform the sheet image 120 for generating the Bit Map 150 in accordance with printing onto the print medium 180. Figure 2 is a block diagram illustrating an exemplary print controller 140.

Referring to Figure 2, the print controller 140, in its generalized form, includes an interpreter module 212 and a halftoning module 214. In one embodiment, these separate components represent hardware used to implement the print controller 140. Alternatively or additionally, the components may represent logical blocks implemented by executing software instructions in a processor of the printer controller 140. Accordingly, the invention is not intended to be limited to any particular implementation as such may be a matter of design choice.

The interpreter module 212 is operable to interpret, render, rasterize, or otherwise convert images (i.e., raw sheetside images such as sheet image 120) of a print job into sheetside bitmaps. The sheetside bitmaps generated by the interpreter module 212 are each a two-dimensional array of pixels representing an image of the print job e.g., a continuous tone image (CTI), or contone image also referred to as full sheetside bitmaps.

The two-dimensional pixel arrays are considered " full " sheetside bitmaps because the bitmaps include the entire set of PELs for the image. The interpreter module 212 is operable to interpret or render multiple raw sheetsides concurrently so that the rate of rendering substantially matches the rate of imaging of production print engines.

The halftoning module 214 is operable to represent the sheetside bitmaps as patterns, having one or more different ink drop sizes or LASER beam exposure levels. For example, the halftoning module 214 may convert the continuous tone sheetside bitmaps to a pattern of ink drops for application to the print medium 180 (e.g., paper). Once computed, the halftoning module 214 transfers the converted sheetside bitmaps to the print head controllers of the printer 160 to apply the ink drop(s) to the tangible medium 180.

In the illustrated example, the halftoning module 214 includes an Area Scaling Module 218 and a Direct Multibit Search (DMS) module 220 as described in more detail below. These modules allow the print controller 140 to convert images from one resolution to another while also altering the halftoning from clustered dot to Stochastic/Aperiodic.

In one embodiment, a first printer is an electrographic printer with a resolution of 600 DPI. The first printer uses a binary periodic halftone to render the image data for printing. Any documents or jobs will be converted to a binary periodic halftone image at 600 DPI before printing. In one embodiment documents are printed and the bitmap image data 150 is saved in a binary format at, for example, a host system so that the documents may be reprinted when desired without regenerating the job. A second printer is an ink jet printer that uses a multibit or multi tone aperiodic halftone for printing. The second printer may support the same or different resolutions from the first printer. In one embodiment the second printer resolution is 360 DPI, the second printer resolution may be any of a variety of different resolutions. There is preferably, but not necessarily, a non-integer multiple factor relating the resolutions between the two printers, 600 DPI and 360 DPI.

This method converts binary halftone images optimized for one type of printer to multibit halftone images optimized for a different type of printer. This process is particularly useful when the original 8-bit continuous-tone job information is not available and only an archived clustered dot screened image is available. The area scaling method is a preferred method to achieve the best image quality. The area scaling and filtering processes, required by DMS, eliminate the need for de screening.

One application of this approach is converting jobs created for an electrophotographic printer to jobs which can be printed on an ink jet printer. Current electrographic printers will commonly print 600 DPI binary halftoned images, while current ink jet printers will commonly print 360 DPI multi-tone halftoned images. This approach improves the print quality and reduces artifacts. This is in part because a stochastic aperiodic structure is generally more pleasing to the human eye on ink jet-printed media than periodic halftones.

Electrophotographic (LASER or EP) printers typically print using clusters of halftone dots. The dots and the clusters are periodic in that they occur at regularly spaced intervals across a page. The PELs of a typical EP printer occur at 600 or 1200 DPI (dots per inch) while the halftone dot clusters may occur at 106, 85, or 141 lines per inch (LPI). The LPI indicates the frequency of the dot clusters as measured along the angle of adjacent clusters e.g. halftone screen angle. The number of PELs in a single completely filled cluster provides the number of possible gradations in the darkness of each cluster. This is because the clusters are formed from a set of tiled cells, each one having the same size. Associated with each cluster is a Threshold Array (TA) that defines the cell area region of each cluster. This TA is tiled across the continuous-tone image that is being rendered. The values in the TA are logically compared to the continuous-tone image values that are being rendered, to determine if the final halftoned image PEL is darkened or not. Halftones created in this fashion, having a single contone image level and threshold levels, are referred to as "point operation" halftones. This is because only a single value from each array is used to determine the state of the PEL.

An advanced form of clustered dot halftoning, called "Supercell", essentially creates different TAs for adjacent dot clusters to increase the number of possible gray levels that can be rendered. These are combined into single larger TAs that can be tiled across the image and compared in a similar manner as single cell halftones. The result is having additional levels of lightness rendered into the final binary image because the larger TA contains additional unique TA levels. Historically e.g. offset printing, clustered dot halftones have been used to render pictures into a printable form. Offset printing employed photographic processes to prepare images for printing in its early history, prior to converting to recent Computer To Plate (CTP) technology. Electrophotographic technology adapted this same technology, employing it using a pixilated version to generate dot clusters having different sizes and shapes. It is well known from this historical setting, that modulated size dot clusters on a rotated fixed grid produce a satisfactory visually pleasing appearance. This clustering, when applied digitally in EP printers, also overcomes a known limitation that makes it difficult to print consistent isolated PELs.

Halftones without clustering produce what many observers consider an even better perceived appearance. Mezzotints created in the 1600's by craftsman, hand roughening copper plates, historically produced images resembling modern halftones that are described as "stochastic" or "aperiodic". This early form of screening predates clustered dot halftones. This early halftone type "Mezzotint" when translated is believed to be the origin of the name of the modern term for screening technology "Halftone". Inkjet printers use stochastic or aperiodic halftones to capitalize on its technology advantages and avoid some of its limitations. Specifically this is the ability to print consistent isolated PELs, while avoiding issues related to drying. Another advantage of the aperiodic halftones is avoiding moire. Moire is an issue when periodic clustered dot halftones are employed in color EP printers, since these are implemented by overlapping screens having different screen angles and LPI.

Each PEL produced by an EP or inkjet printer can be multibit, meaning that it can have multiple exposures or drop sizes respectively. This further multiplies the possible variations that can be produced by the halftone technology by adding additional combinations of printed PEL sizes.

Many documents and images have been saved in print formats for electrophotographic printers. These documents have been screened using binary periodic halftones at specific PEL resolutions and halftone frequency LPI. If these documents are simply printed as binary periodic dots with a change in resolution, then the resulting printed results will appear much worse than when printed using electrophotographic technology. This is due to the change in resolution, which can introduce serious scaling or resampling artifacts, especially for the cases where the original and target printer resolutions are not integer multiples of each other. In addition the screening initially applied for the EP printer is suboptimal for images printed on an ink jet printer. Ideally one would like to employ the advantages of multibit, available in the target ink jet printer when converting from the binary of the original image. Furthermore one would also like to recover the additional levels of gray that may be in the binary image if supercell technology had been employed when the image was created originally.

To convert a document or job configured for the first printer so that it can be printed on the second printer, area scaling may first be used to convert the 600 DPI binary periodic halftoned images to e.g. 360 DPI 8-bit halftoned images. For a black and white image, this operation produces gray in the image on an 8 bit level. However, the periodic structure from the original clustered dot halftones may still be visible in these multibit images. This reflects that the data will have an accurate continuous-tone representation of the halftoned image. Area scaling is a preferred resolution conversion/resampling method, however, other scaling methods such as bilinear or bicubic can be employed. Nearest neighbor scaling may also be used, however, it produces artifacts.

A second process is to apply a DMS algorithm to the gray scale multibit images. This converts the 8 bit area scaled image to an aperiodic multibit halftoned image. DMS is an iterative neighborhood processing halftoning algorithm. The input 8 bit image is iteratively processed to reduce the error difference between the filtered continuous-tone input and filtered multibit output image. As the iterations proceed, the DMS algorithm will reduce the appearance of the periodic structure producing the desired aperiodic structure.

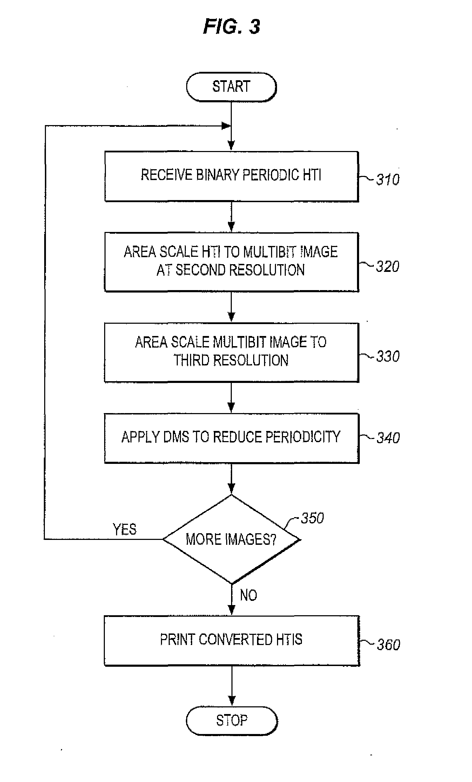

The process is shown in a simplified form in the example process flow diagram of Figure 3. At 310 a binary periodic halftone image (HTI) is received, for example a document optimized for an electrographic printer. At 320, area scaling is applied to the image to produce a continuous-tone intermediate image at a second resolution. At 330, area scaling of the image produced by 320 is applied to produce a continuous-tone second image at a third resolution that matches the resolution of the target printer. The two area scaling operations can be replaced by a single operation, or iterated, depending on the particular implementation, provided that the final resolution equals the desired target resolution.

The multiple scaling operations convert the binary image levels to continuous-tone levels. This typically involves using a first area scaling that scales to a resolution lower than the binary image and then to the final target resolution that equals the target resolution. Another application for the dual scaling is the case where the binary resolution to aperiodic resolution is an integer multiple, since area scaling reduces to nearest neighbor scaling for this case.

The multibit image at 320 may be a gray scale image, if the original image at 310 was a black and white image or it may be a color multibit image, if the original image was a color image. For color images, the image may be separated into different images, one for each color component. For many printers, a color image will have C (Cyan), M (Magenta), Y (Yellow), and K (Black) components, although the invention is not so limited. Any other color model may be handled in the same way. The color component images will be converted from binary into multibit in the same way that the black and white image is converted into a gray scale image.

At 340, DMS is applied to the continuous-tone HTI of 330 to reduce the periodicity of the image and change the bitdepth to match the multibit screening capability. Typically the continuous-tone image at 330 is eight bits. DMS reduces the bitdepth to a lower value e.g. 2 bits having four sizes, none, small, medium and large drops. DMS may be implemented using any of a variety of different Human Visual System (HVS) models. The particular model may be selected based on the results that are obtained with particular types of images, printers, and other factors. One particular HVS model, once selected, has a defined functional form having a variability that is a function of the viewing distance and DPI of the image. The distance and DPI values combine to define the specific filter to be employed in the DMS algorithm. The filter is explicitly and completely defined once the HVS model set, viewing distance and DPI are established. As an alternative, instead of using DMS with HVS, a neighborhood halftoning technique may be used with HVS.

At 350, the process returns for any other images and at 360, the image is printed on a printer that is well-suited to printing multibit aperiodic HTIs, such as an inkjet printer.

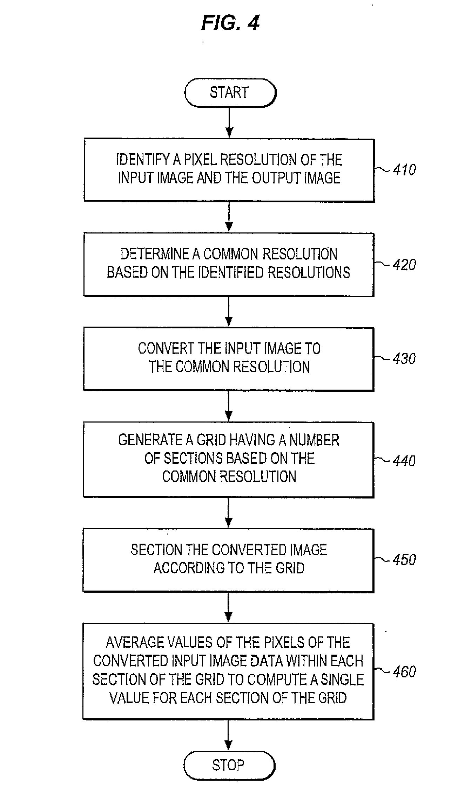

Figure 4 is a process flow diagram for an example of an area scaling process that may be applied to the present invention. Figure 4 shows a method of scaling an image in one exemplary embodiment. In this embodiment, the print controller 140 has an image scaling system. It receives the image 120 having a particular DPI and scales the image 120 according to the DPI of the desired output printer 160. The number of pixels of the input image and the number of pixels of the output image are linearly proportional to the DPIs of the input and output devices. The ratio of the number of pixels of the input image 120 to the number of pixels of the output printer 160 generally results in a non-integer scaling factor to which the image scaling system accordingly scales the image. In doing so at 410, the image scaling system first identifies the pixel resolution of the input image 120 and a pixel resolution for the output image. At 420, the image scaling system determines a ratio of the two pixel resolutions (e.g., the number of pixels of the input image and the number of pixels of the output image), to determine a scaling ratio for a common resolution, i.e. a resolution common to the input image and the output image.

For purposes of illustration, an example is described below for converting a 240 DPI image to a 360 DPI image, although virtually any scaling ratio may be performed. The same principles may be used to convert a 600 DPI image to a 360 DPI image. Alternatively, the 600 DPI image may be converted to 720 DPI and then scaled again by one half to finally achieve 360 DPI. Moreover, the scaling may be performed in either direction (i.e., from a higher resolution to a lower resolution or vice versa). In this example, when a 240 DPI image is scaled to a 360 DPI format, the ratio of 360 DPI to 240 DPI results in a non-integer scaling factor of 1.5. The image scaling system determines a common resolution (720 DPI) which is a multiple of both the 240 DPI image and the 360 DPI of the output image. In this case, 720 DPI is evenly divisible by 240 DPI, by a factor of three and by 360 DPI by a factor of two. In a similar way to go from 600 DPI to 360 DPI, the lowest common denominator factor is applied resulting in a common resolution of 1800 DPI.

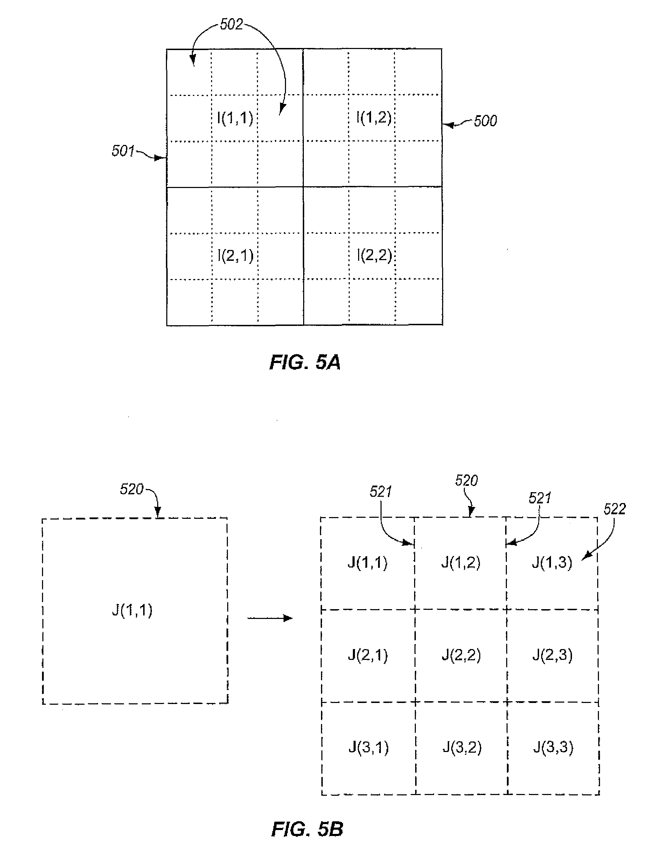

Based on this common scaling resolution. e.g. 720 DPI, the image scaling system converts the input image at 240 DPI to the common resolution at 430, thereby increasing the number of pixels in the input image. The common resolution serves as an intermediate resolution for the transition from the first resolution to the second resolution. For example, each pixel in the input image is increased to nine pixels due to a scaling factor of three in the horizontal and vertical directions, as illustrated in Figure 5A. As shown in Figure 5A, one pixel 501 of the 240 DPI format is nearest neighbor scaled to fill the 3x3 pixels 502 in the 720 DPI common space. In this case of integer ratio scaling using nearest neighbor, each pixel at 720 DPI will be replicated and have the same color value as the corresponding image pixel at 240 DPI.

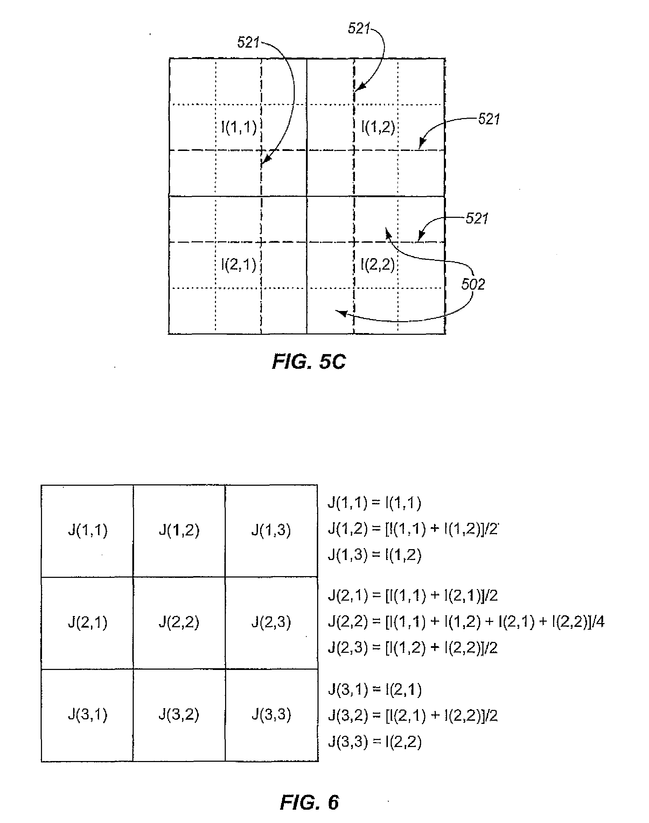

At 440, the image scaling system also generates a grid 520 as shown in Figure 5B representing PELs at the output resolution as formed by groups of PELs at the common resolution. The grid 520 is configured by increasing the resolution of the 360 DPI output resolution to the 720 DPI common resolution, wherein each pixel of the grid is represented by a placeholder color or gray scale value J (e.g., at the locations (1,1), (1,2), (1,3) ... (3,3)). For example, for a single grid pixel J(1,1) in the 360 DPI format, a total of four grid pixels would exist in the 720 DPI common resolution due to a scaling factor of two in the horizontal and vertical directions, (e.g., one pixel J(1,1) of the 360 DPI format is represented by the four grid pixels I(1,1), I(1,1), I(1,1), and I(1,1) in the 720 DPI format). Because of the common scaling resolution, the grid lines 521 of the grid 500 define the pixels 520, as shown in Figures 5B and 5C. For example, each of the 360 DPI pixels J(1,1), J(1,2), J(2,1), and J(2,2) formed by pixels on the 720 DPI common grid are created using the pixels 502 of the 360 DPI grid.

The grid may then be used to compute pixel values for the scaled image based on the input image pixels 502. For example, the input image 500 of Figure 5A illustrates four pixels in a 240 DPI format having various color or gray scale values of I at pixel locations (1,1), (1,2), (2,1), and (2,2). When scaled to the 720 DPI format as in Figure 5C, each pixel location is represented by nine pixels having the same color value. Based on the grid 520, the image scaling system may section the converted input image 500 such that each section of the grid 520 includes an integer number of pixels 522 of the converted input image (e.g. 4 pixels of the converted image). This corresponds to operation 450 in Figure 4. Afterwards , at 460 the image scaling system may compute color values in the grid 500 by averaging the color values of the pixels falling within each section of the grid. In this regard, the J color values (1,1), (1,2), (1,3), (3,3) may be computed as a function of the I color values at the pixel locations (1,1), (1,2), (2,1), and (2,2) according to how they overlap those pixel locations. Such is shown to the immediate right of the final scaled 360 DPI image 600 of Figure 6, for the case of 240 to 360 DPI scaling.

The model for this image scaling algorithm can be computed using the discrete function that allows implementation using digital processing. Assume that the input image is a function of i,j where i and j are the indices of the pixels in the input image space along the x and y directions respectively. (Index origin one is assumed for the all indices in the following equations.)

$$Input\ image = I_1(i,j) \qquad \text{Eq. 1}$$

Assume the image is scaled to the common space where m,n are the indices of the pixels in the common space and ratio 1 is the scaling ratio from the input space to the common space. "ceil" denotes the mathematical round up operation.

$$I_2(m,n) = Input\ image\ scaled\ to\ common\ space = I_1\left(ceil(m/ratio1), ceil(n/ratio1)\right)$$

$$\text{Eq. 2}$$

Each pixel for the image in the output space can be determined from a summation of the common space pixels by averaging all of the pixels within the boundaries of the output space pixels in the common space. The pixels in the common space corresponding to the pixels in the output space can be determined. In this example, q and r are the output space indices. Assume that ratio2 is the scaling ratio of the output pixels to the pixels in the common space.

$$q = ceil\left(\frac{m}{ratio2}\right) \qquad \text{Eq. 3}$$

And

$$r = ceil\left(\frac{n}{ratio2}\right) \qquad \text{Eq. 4}$$

In the previous example n index values of 1 and 2 with a scaling ratio2 of two would both be members of the pixel having index value of q=1. This would also be the case for n of 1 and 2 for the r=1 index value pixel. In the example for all possible n, m values only four pixels are members of the {q,r}={1,1} output pixel according to the equations. Computing the intensity values for all pixels having membership and averaging, results in the values for each of the pixels in the scaled output space.

Given a and b, indices corresponding to the n values are the indices for valid memberships in output space pixel for index q. In addition c and d are the m indices of pixels that are valid members of the output pixels having index value of r. This gives:

$$output\ space\ pixel\ \{q,r\} = \ 1/ratio2^2 \sum_{m=a}^{b} \sum_{m=c}^{d} I_2(m,n)$$

Eq. 5

This process is repeated for all output space pixels {q,r}, padding input space image data if required with a suitable background data to fill data so as to create valid image data values for the h function. Features related to transparency are generally not needed in this implementation. Only the scaling algorithm is generally required since the application starts with image data that is binary screened.

This area scaling can also be extended to an anamorphic case using the scaling factors for two different uniform scalings. For example, the factors can be computed for each scaling ratio, vertical and horizontal.

Alternatively or additionally, the scaling algorithm may operate once in the horizontal direction to determine the mapping of input pixels to the output pixels for each row. The horizontal scaling is performed in the same manner for each row (i.e., the horizontal indices of the pixels of the input image generally do not change from row to row). The scaling algorithm may perform a vertical scaling once to determine a mapping of input scanlines that resulted from the first scaling applied in the horizontal direction. According to one embodiment, halftoning module 214 performs halftoning using a screen that is generated via a Direct Multibit Search Algorithm (DMS). In such an embodiment, the DMS optimizes a halftone pattern at each gray level using a Human Visual System (HVS) or other suitable filter and selects from among multiple drop sizes that printer 160 is capable of applying to the tangible medium 180. In a further embodiment, the DMS screen is generated at host system 100 or another host system in printing network 100. However, the mask may be generated at a third party computer system and transferred to printing network 100. In another embodiment the DMS algorithm is applied to the area transformed image to generate the halftoned image. In this case a screen is not created, only the transformed image.

The DMS algorithm is an iterative/recursive search heuristic that uses a perceptual filter, such as a HVS model, to minimize the perceived error difference ($\varepsilon$), between a continuous tone image (CTI) and its corresponding rendered halftone image (HTI). This error may be represented as:

$$\varepsilon = |h(x,y) *^* g(x,y) - h(x,y) *^* f(x,y)|^2 dxdy, \qquad \text{Eq. 6}$$

where ** denotes 2-dimensional convolution, h(x,y) represents the point spread function (PSF) of the HVS or other suitable filtering function, f(x,y) is the continuous tone original image and g(x,y) is the halftone image corresponding to the original image, where all image values are assumed to lie between 0 (white) and 1 (black).

The halftone image g(x,y) itself incorporates a printer model.

$$g(x,y) = \sum_m \sum_n g[m,n]p(x - mX, y - nX),\qquad\qquad Eq.\ 7$$

which represents the combination of the digital halftone image g[m,n] with a spot profile p(x,y) having device PEL spacing X, where X is the inverse of the printer addressability DPI. Superposition is assumed in this model for the interaction between overlapping spots. The digital halftone image g[m,n] can have any absorptance value between 0 (white) and 1 (black).

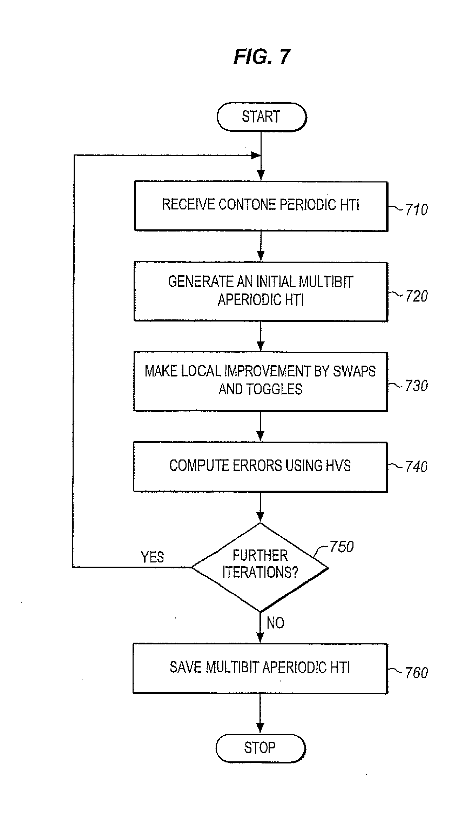

Figure 7 is a process flow diagram showing DMS as an iterative approach that uses several passes through the halftone image (HTI) before converging to the final HTI. The DMS algorithm receives the continuous-tone HTI at 710 from the scaling operation 330 and starts at 720 by generating an initial HTI. A local improvement to the HTI is produced at 730 by swapping and toggling. Errors are computed and the cost function is calculated at 740 to determine an error that is perceptually filtered using an HVS model. The cost function is compared to a target cost. If the cost is not met at 750 then further iterations are performed. The iterations ultimately result in an optimized HTI saved at 760 by selecting the most appropriate swaps and toggles. Swapping may be described as the operation of switching the absorptance values of nearby pixels. Toggling may be described as the operation of changing the absorptance value of individual pixels.

The cost function may be represented as $\varepsilon = <\tilde{e}, \tilde{e}>$, where $<\cdot,\cdot>$ denotes the inner product and $\tilde{e}(x,y) = h(x,y)$ **(g(x,y) -f(x,y))** represents the perceptually filtered error. In such an embodiment, the CTI f(x,y) may also be expressed in terms of its samples f[m,n] where (m,n) are coordinates on the halftone array or printer grid. Thus, the perceived error is given by

$$\tilde{e}(x,y) = \sum_{m,n} e[m,n]p\ (x - mX, y - nX),\qquad\qquad Eq.\ 8$$

where e[m,n] = g[m,n] - f[m,n], and $\tilde{p}(x,y) = h(x,y)** p(x,y)$ is the perceived printer spot profile.

Considering the effect of a trial change. The new error will be $\tilde{e}' = \tilde{e}+\Delta\tilde{e}$. Substituting this and expanding the inner product results in $\varepsilon' = \varepsilon + 2 < \Delta\tilde{e}, \tilde{e} > + < \Delta\tilde{e}, \Delta\tilde{e} >$, assuming all signals are real-values. Either a toggle at pixel $(m_0, n_0)$ or a swap between pixels $(m_0, n_0)$ and $(m_1, n_1)$ can be represented as $g^*[m,n] = g[m,n] + \sum_i a_i \delta[m - m_i, n-n_i]$. As a result,

$$\Delta\tilde{e}(x,y) = \sum_i a_i\ \tilde{p}(x - m_i X, y - n_i X),\ and\qquad\qquad Eq.\ 9$$

$$\Delta\varepsilon = 2\sum_i c_{\tilde{p}\tilde{e}}[m_i, n_i] + \sum_{i,j} a_i\ a_j c_{\tilde{p}\tilde{p}}[m_i - m_j,\ n_i - n_j],\ where\qquad\qquad Eq.\ 10$$

$$c_{\tilde{p}\tilde{e}}[m,n] = <\tilde{p}(x,y),\ \tilde{e}(x + mX, y + nX) >,\ and\qquad\qquad Eq.\ 11$$

$$c_{\tilde{p}\tilde{p}}[m,n] = <\tilde{p}(x,y),\ \tilde{p}(x + mX, y + nX) >.\qquad\qquad Eq.\ 12$$

In one embodiment, assuming that a given printer can produce S possible output states/drops with absorptance levels $\alpha_1, \alpha_2,..., \alpha_s$ at every PEL location. Then, $\alpha_i$ represents the amount of change in the gray level for toggle as: $\alpha_i = g_{new}[m_i, n_i] - g_{old}[m_i, n_i]$. A swap between pixels $i$ and $j$ is equivalent to two toggles with $g_{new}[m_j, n_j] = g_{old}[m_i, n_i]$ and $g_{new}[m_i, n_i]=g_{old}[m_j, n_j]$. Thus, the amount of change in the gray level for swap is represented as $\alpha_i=g_{old}[m_j, n_j]-g_{old}[m_i, n_i]$ and $\alpha_j = g_{old}[m_i, n_i]-g_{old}[m_j, n_j]$. Then $\alpha_j = -\alpha_i$ except for j = 0 (e.g., toggle, $\alpha_0 = 0$).

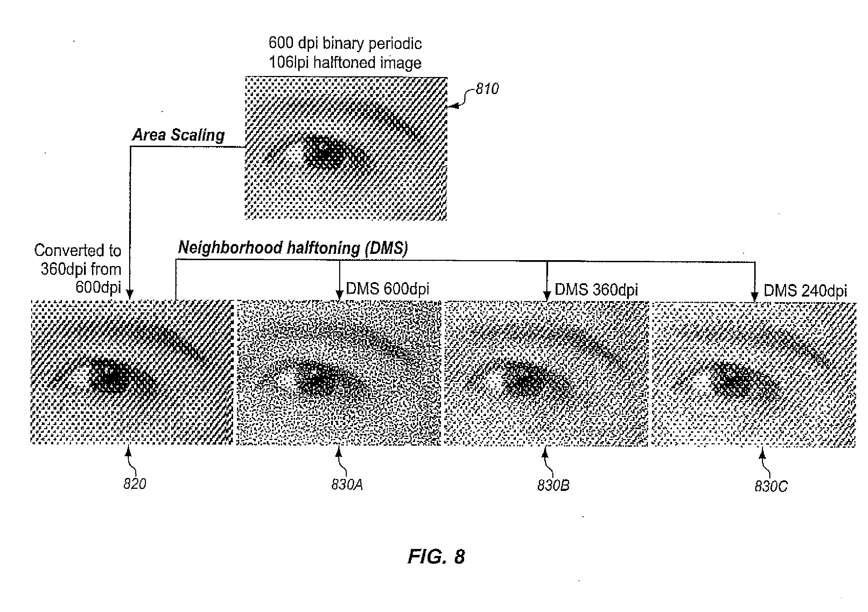

Figure 8 shows an example of an overall conversion process flow with possible example results of applying the image conversion described above. An initial image 810 is shown as a highly magnified portion of an image optimized for an electrographic printer. The image is a 600 DPI binary periodic HTI screened at 106 LPI. Area scaling is applied to the image to produce a second scaled HTI 820. This highly magnified portion of the image is a 360 DPI continuous-tone HTI to match the desired output of the DMS algorithm.

The scaled image is in a periodic form with a specific LPI. The image can then be made aperiodic using scaling and DMS. DMS uses a HVS model. In the illustrated example, three different HVS models are used. The left most image 830a uses a HVS model having a 600 DPI filter size. The center image 830b uses a HVS model with a 360 DPI filter size and the right most image 830c uses a HVS model with a 240 DPI filter size. Any one of these or other models may be used depending on the nature of the saved starting image 810 and the nature of the printer to be used for the output image. In the example of Figure 7, the system would likely be configured for the HVS using the 600 DPI filter model because that image has almost all evidence of the periodic screen removed and appears nearly entirely aperiodic. This case has the most natural appearance, however, the invention is not so limited.

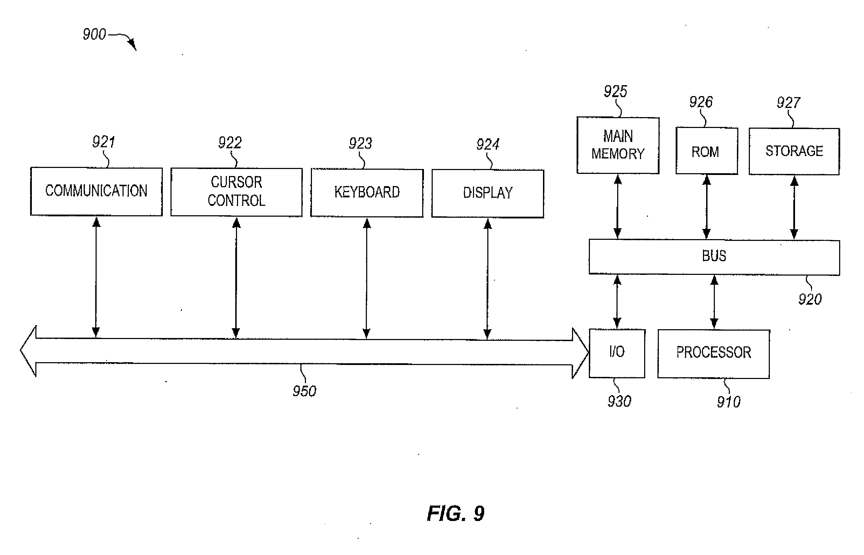

Figure 9 illustrates a computer system 900 on which print controller 140 and/or host system 90 may be implemented. Computer system 900 includes a system bus 920 for communicating information, and a processor 910 coupled to bus 920 for processing information.

Computer system 900 further comprises a random access memory (RAM) or other dynamic storage device 925 (referred to herein as main memory), coupled to bus 920 for storing information and instructions to be executed by processor 910. Main memory 925 also may be used for storing temporary variables or other intermediate information during execution of instructions by processor 910. Computer system 900 also may include a read only memory (ROM) and or other static storage device 926 coupled to bus 920 for storing static information and instructions used by processor 910.

A data storage device 925 such as a magnetic disk or optical disc and its corresponding drive may also be coupled to computer system 900 for storing information and instructions. Computer system 1000 can also be coupled to a second I/O bus 950 via an I/O interface 930. A plurality of I/O devices may be coupled to I/O bus 950, including a display device 924, an input device (e.g., an alphanumeric input device 923 and or a cursor control device 922). The communication device 921 is for accessing other computers (servers or clients). The communication device 921 may comprise a modem, a network interface card, or other well-known interface device, such as those used for coupling to Ethernet, token ring, or other types of networks.

The techniques described herein are optimized for use with images. However, the same or similar techniques may also be used to convert saved documents that include line art and embedded text without using additional segmented operations.

Embodiments of the invention may include various steps as set forth above. The steps may be embodied in machine-executable instructions. The instructions can be used to cause a general-purpose or special-purpose processor to perform certain steps. Alternatively, these steps may be performed by specific hardware components that contain hardwired logic for performing the steps, or by any combination of programmed computer components and custom hardware components.

Elements of the present invention may also be provided as a machine-readable medium for storing the machine-executable instructions. The machine-readable medium may include, but is not limited to, floppy diskettes, optical disks, CD-ROMs, and magneto-optical disks, ROMs, RAMs, EPROMs, EEPROMs, magnetic or optical cards, propagation media or other type of media/machine-readable medium suitable for storing electronic instructions. For example, the present invention may be downloaded as a computer program which may be transferred from a remote computer (e.g., a server) to a requesting computer (e.g., a client) by way of data signals embodied in a carrier wave or other propagation medium via a communication link (e.g., a modem or network connection).

Whereas many alterations and modifications of the present invention will no doubt become apparent to a person of ordinary skill in the art after having read the foregoing description, it is to be understood that any particular embodiment shown and described by way of illustration is in no way intended to be considered limiting. Therefore, references to details of various embodiments are not intended to limit the scope of the claims, which in themselves recite only those features regarded as essential to the invention.

The present application is based on and claims the benefit of priority of US Application No. 14/103,761 filed on December 11, 2013.

**Claims**

**1.** A method comprising:

receiving a first image as a binary periodic Halftone Image (HTI) with a first resolution;

scaling the image to render a second image as a continuous-tone HTI with a second resolution; and iteratively processing the scaled image to render a third_image as a multibit aperiodic HTI.

2. The method of Claim 1, wherein scaling the image comprises:

   upscaling the first image to an intermediate image with a higher intermediate resolution; and then downscaling the intermediate image to the second image at the second resolution.

3. The method of Claim 2 wherein scaling the image comprises:

   downsampling the image to a lower resolution;
   then upsampling the downsampled image to the intermediate resolution;
   upsampling the intermediate resolution image to a third resolution; and
   downsampling the third resolution image to the desired resolution before iteratively processing.

4. The method of Claim 2, further comprising determining a common resolution based on the first resolution and the second resolution and using the common resolution as the intermediate resolution.

5. The method of Claim 4, wherein determining a common resolution comprises determining a resolution that is a multiple of the first resolution and a multiple of the second resolution.

6. The method of Claim 2, wherein downscaling comprises sectioning the intermediate image and averaging pixel values within each section to compute a single pixel value for each section.

7. The method of Claim 1, wherein iteratively processing comprises applying a Direct Multibit Search (DMS) algorithm to render a third image as a multibit aperiodic HTI.

8. The method of claim 7, wherein applying a DMS algorithm comprises:

   computing a change in pixel error for a first pixel by toggling a first pixel of the scaled image with possible output states; and
   swapping the first pixel with all neighbor pixels.

9. The method of claim 8, wherein computing a change in pixel error comprises finding an operation with a maximum decrease in pixel error for the first pixel after computing the change in pixel error.

10. A machine-readable recording medium including programs that, when accessed by a machine, cause the machine to perform operations comprising:

    receiving a first image as a binary periodic Halftone Image (HTI) with a first resolution;
    scaling the image to render a second image as a continuous-tone HTI with a second resolution; and
    iteratively processing the scaled image to render a third image as a multibit aperiodic HTI.

11. The machine-readable medium of Claim 10, wherein scaling the image comprises:

    upscaling the first image to an intermediate image with a higher intermediate resolution; and
    then downscaling the intermediate image to the second image at the second resolution.

12. A printing system (130) comprising:

    a print engine; and
    a print controller (140) operable for:

      receiving a first image as a binary periodic Halftone Image (HTI) with a first resolution;
      scaling the image to render a second image as a continuous-tone HTI with a second resolution; and
      iteratively processing the scaled image to render a third image as a multibit aperiodic HTI.

13. The system of Claim 12 wherein scaling the image comprises:

downsampling the image to a lower resolution;
then upsampling the downsampled image to the intermediate resolution;
upsampling the intermediate resolution image to a third resolution; and
downsampling the third resolution image to the desired resolution before iteratively processing.

14. The system of Claim 13, the print controller further operable for determining a common resolution based on the first resolution and the second resolution and using the common resolution as the intermediate resolution.

15. The system of Claim 13, wherein downsampling the third resolution image comprises sectioning the intermediate resolution image and averaging pixel values within each section to compute a single pixel value for each section.

# FIG. 1

100

HOST SYSTEM
110

SHEET
IMAGE
120

PRINT SYSTEM
130

PRINT CONTROLLER
140

BIT MAP
150

ARCHIVE

PRINTER
160

PRINT MEDIUM
180

*FIG. 2*

SHEET
IMAGE

*120*

PRINT
CONTROLLER
*140*

INTERPRETER MODULE
*212*

HALFTONING MODULE
*214*

AREA SCALING MODULE
*218*

DIRECT MULTI-BIT
SEARCH MODULE
*220*

## FIG. 3

```
                    ( START )
                        |
        +-------------->|
        |               v
        |    +---------------------------+
        |    | RECEIVE BINARY PERIODIC HTI |  ~ 310
        |    +---------------------------+
        |               |
        |               v
        |    +---------------------------+
        |    | AREA SCALE HTI TO MULTIBIT IMAGE |  ~ 320
        |    |    AT SECOND RESOLUTION    |
        |    +---------------------------+
        |               |
        |               v
        |    +---------------------------+
        |    | AREA SCALE MULTIBIT IMAGE TO |  ~ 330
        |    |     THIRD RESOLUTION      |
        |    +---------------------------+
        |               |
        |               v
        |    +---------------------------+
        |    | APPLY DMS TO REDUCE PERIODICITY |  ~ 340
        |    +---------------------------+
        |               |
        |               v
        |            / 350
        | YES    /            \
        +-------<  MORE IMAGES?  >
                 \            /
                     \      /
                       | NO
                       v
             +---------------------------+
             |    PRINT CONVERTED HTIS    |  ~ 360
             +---------------------------+
                       |
                       v
                   ( STOP )
```

14

FIG. 4

START

IDENTIFY A PIXEL RESOLUTION OF THE INPUT IMAGE AND THE OUTPUT IMAGE — 410

DETERMINE A COMMON RESOLUTION BASED ON THE IDENTIFIED RESOLUTIONS — 420

CONVERT THE INPUT IMAGE TO THE COMMON RESOLUTION — 430

GENERATE A GRID HAVING A NUMBER OF SECTIONS BASED ON THE COMMON RESOLUTION — 440

SECTION THE CONVERTED IMAGE ACCORDING TO THE GRID — 450

AVERAGE VALUES OF THE PIXELS OF THE CONVERTED INPUT IMAGE DATA WITHIN EACH SECTION OF THE GRID TO COMPUTE A SINGLE VALUE FOR EACH SECTION OF THE GRID — 460

STOP

FIG. 5A

FIG. 5B

*FIG. 5C*

$J(1,1) = I(1,1)$

$J(1,2) = [I(1,1) + I(1,2)]/2$

$J(1,3) = I(1,2)$

$J(2,1) = [I(1,1) + I(2,1)]/2$

$J(2,2) = [I(1,1) + I(1,2) + I(2,1) + I(2,2)]/4$

$J(2,3) = [I(1,2) + I(2,2)]/2$

$J(3,1) = I(2,1)$

$J(3,2) = [I(2,1) + I(2,2)]/2$

$J(3,3) = I(2,2)$

*FIG. 6*

## FIG. 7

```
                    ┌──────────┐
                    │  START   │
                    └────┬─────┘
                         │
  ┌──────────────────────┼
  │                       ▼
  │         ┌───────────────────────────────┐
  │         │  RECEIVE CONTONE PERIODIC HTI  │──~710
  │         └───────────────┬───────────────┘
  │                         ▼
  │         ┌───────────────────────────────┐
  │         │  GENERATE AN INITIAL MULTIBIT  │──~720
  │         │        APERIODIC HTI           │
  │         └───────────────┬───────────────┘
  │                         ▼
  │         ┌───────────────────────────────┐
  │         │ MAKE LOCAL IMPROVEMENT BY SWAPS│──~730
  │         │         AND TOGGLES            │
  │         └───────────────┬───────────────┘
  │                         ▼
  │         ┌───────────────────────────────┐
  │         │   COMPUTE ERRORS USING HVS     │──~740
  │         └───────────────┬───────────────┘
  │                         ▼
  │              ╱──────────────────╲
  │  YES        ╱      FURTHER        ╲  ~750
  └────────────◀     ITERATIONS?       ▶
               ╲                      ╱
                ╲──────────┬─────────╱
                           │ NO
                           ▼
          ┌───────────────────────────────┐
          │   SAVE MULTIBIT APERIODIC HTI  │──~760
          └───────────────┬───────────────┘
                          ▼
                    ┌──────────┐
                    │  STOP    │
                    └──────────┘
```

*FIG. 8*

FIG. 9

900

925 MAIN MEMORY

926 ROM

927 STORAGE

920 BUS

910 PROCESSOR

930 I/O

950

924 DISPLAY

923 KEYBOARD

922 CURSOR CONTROL

921 COMMUNICATION

**EUROPEAN SEARCH REPORT**

Application Number

EP 14 19 3846

Europäisches Patentamt
European Patent Office
Office européen des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/171873 A1 (CHANG CHING-WEI [US]) 21 November 2002 (2002-11-21) | 1-6, 10-15 | INV. H04N1/40 |
| Y | * abstract * <br> * figures 1-13 * <br> * paragraph [0001] - paragraph [0044] * | 7-9 | |
| A | US 2012/062958 A1 (KIM KYEONG-MAN [KR]) 15 March 2012 (2012-03-15) <br> * abstract * <br> * figures 1-3,9 * <br> * paragraph [0009] - paragraph [0077] * | 6,15 | |
| Y | US 2013/265612 A1 (CHANDU KARTHEEK [US] ET AL) 10 October 2013 (2013-10-10) <br> * abstract * <br> * figures 1-9 * <br> * paragraph [0001] - paragraph [0060] * | 7-9 | |

TECHNICAL FIELDS SEARCHED (IPC)

H04N
G06K

The present search report has been drawn up for all claims

| Place of search | Date of completion of the search | Examiner |
|---|---|---|
| The Hague | 28 April 2015 | Nicol, Michelle L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 14 19 3846

This annex lists the patent family members relating to the patent documents cited in the above-mentioned European search report.
The members are as contained in the European Patent Office EDP file on
The European Patent Office is in no way liable for these particulars which are merely given for the purpose of information.

28-04-2015

| Patent document cited in search report | | Publication date | Patent family member(s) | | Publication date |
|---|---|---|---|---|---|
| US 2002171873 | A1 | 21-11-2002 | NONE | | |
| US 2012062958 | A1 | 15-03-2012 | EP<br>KR<br>US<br>US | 2429166 A1<br>20120027964 A<br>2012062958 A1<br>2014168667 A1 | 14-03-2012<br>22-03-2012<br>15-03-2012<br>19-06-2014 |
| US 2013265612 | A1 | 10-10-2013 | US<br>US | 2013265612 A1<br>2014253976 A1 | 10-10-2013<br>11-09-2014 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 14103761 B